# EUROPEAN PATENT APPLICATION

(11) **EP 0 706 251 A1**
(43) Date of publication of application: **10.04.1996**
(21) Application number: 95306963.0
(22) Date of filing: 02.10.1995
(51) Int. Cl.: H02G 3/18

(54) **Flush service cover for floor box**

(30) Priority: 07.10.1994 US 319846
(71) Applicant: THOMAS & BETTS CORPORATION, Memphis Tennessee 38119 (US)
(72) Inventor: Whitehead, James H., Collierville, Shelby Tennessee (US)
(74) Representative: Howick, Nicholas Keith

(57) **Abstract**

An improved floor box assembly (10) for providing electrical and telecommunication connections, having a flush cover (16) with a plurality of peripheral slots (24) formed therein for allowing access of electrical cables to pass therethrough, and a plurality of plugs (26) for closing the slots when not in use. The plugs are slidably insertable in, and removable from, the slots, and enable the cover to maintain a flush profile with the floor when the box is in use.

## Description

### Field of the Invention

This invention relates generally to electrical floor boxes and, more particularly, to an improved flush service cover for use therewith.

### Background of the Invention

Floor-mounted receptacle boxes are commonly used in commercial settings for providing electrical and telecommunication connections for modular work spaces. Typically referred to as floor boxes, these assemblies provide a plurality of receptacles mounted beneath a conventional floor. A typical floor box access is visible when not in use and is not well suited for use with modular furniture connectors. The covers on known boxes are also discernible when the boxes are not in use.

With conventional floor boxes, access to the interior receptacles is gained by opening the cover and flipping one or more access lugs to their upright, open position, and passing the electrical and/or telecommunication lines through the open lug(s). With the cover re-installed, the open access lugs remain up or prevent the cover from closing completely. Knock-out plugs have been considered as possible replacements for conventional lugs, but are unacceptable due to their propensity to fall out when placed under direct pressure. A floor box cover must be able to support the full weight of an adult, even one wearing high-heeled shoes. Accordingly, a need has been recognized for a floor box cover which maintains its flush profile even in use, and which is structurally sound.

### Brief Summary of the Invention

It is an object of the present invention to provide a flush floor box cover which maintains its flush profile when in use.

It is a further object of the present invention to provide a flush box cover which is completely hidden when not in use.

It is another object of this invention to provide a flush floor box cover which is structurally capable of withstanding typical loads experienced in a commercial environment.

These and other objects are accomplished by the present invention, which comprises a unique cover for use with a conventional floor box. The cover is securable to the open top of the floor box, and has a generally planar top surface adapted to lie substantially flush with the floor upon installation of the cover on the box. The cover includes at least one access opening suitable for allowing entrance of an electrical cable into the box. A plug member is selectively installable within, and removable from, the access opening, whereupon installation of the plug member creates a substantially void free top surface for the box, while removal of the plug member allows insertion of the cable through the access opening. In the preferred embodiment, the cover includes three such access openings and plugs.

The above stated and other objects will become apparent to those skilled in the art upon reading the following detailed description in conjunction with the appended drawings.

### Brief Description of the Drawings

FIGURE 1 is a top, front perspective exploded view of the cover of the present invention;
FIGURE 2 is a top, plan view of the cover installed in a typical floor; and
FIGURE 3 is a side sectional view through the cover shown in Fig. 2, revealing the cables therein.

### Detailed Description of the Preferred Embodiment

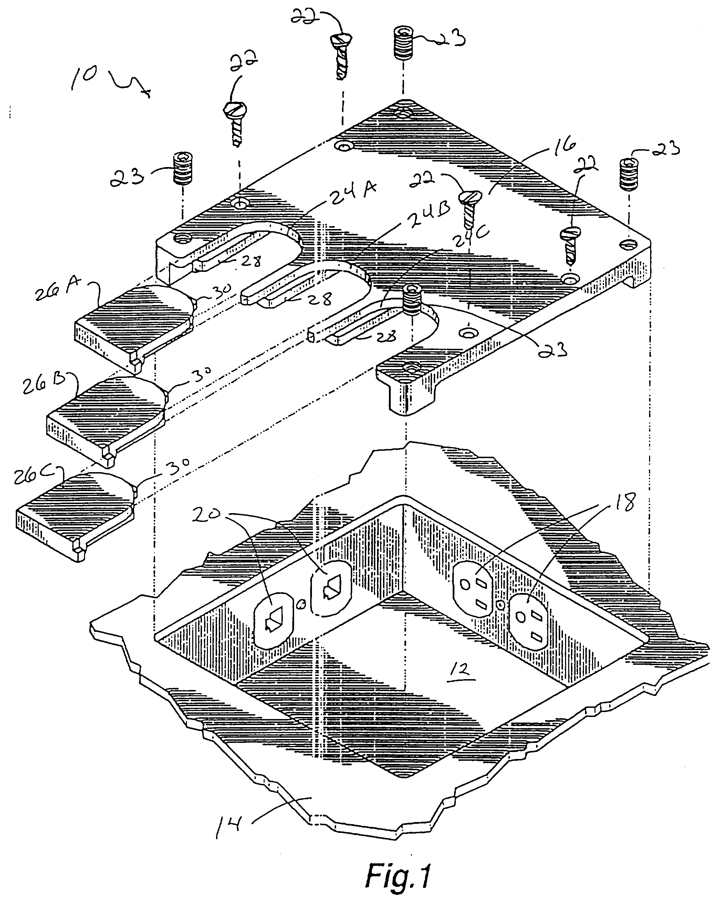

Referring initially to Fig. 1, a floor mounted assembly 10 is shown comprising a conventional floor box 12 mounted beneath the surface of floor 14, and a unique cover 16 which is the primary focus of the present invention. As illustrated herein, floor box 12 includes a plurality of electrical connections 18 and telecommunication jacks 20 for connection to electrical cables, as will be described. Electrical connections 18 may be conventional electrical receptacles. Connections may also be made by splicing or attaching conductors of electrical cables which may be fed through flexible conduit or other raceways, which are attached to the walls of the floor box. As those skilled in the art will readily recognize, however, floor box 12 may include a variety of other types of connections, receptacles or cable raceways as needed for the particular installation, while utilizing the advantages provided by cover 16.

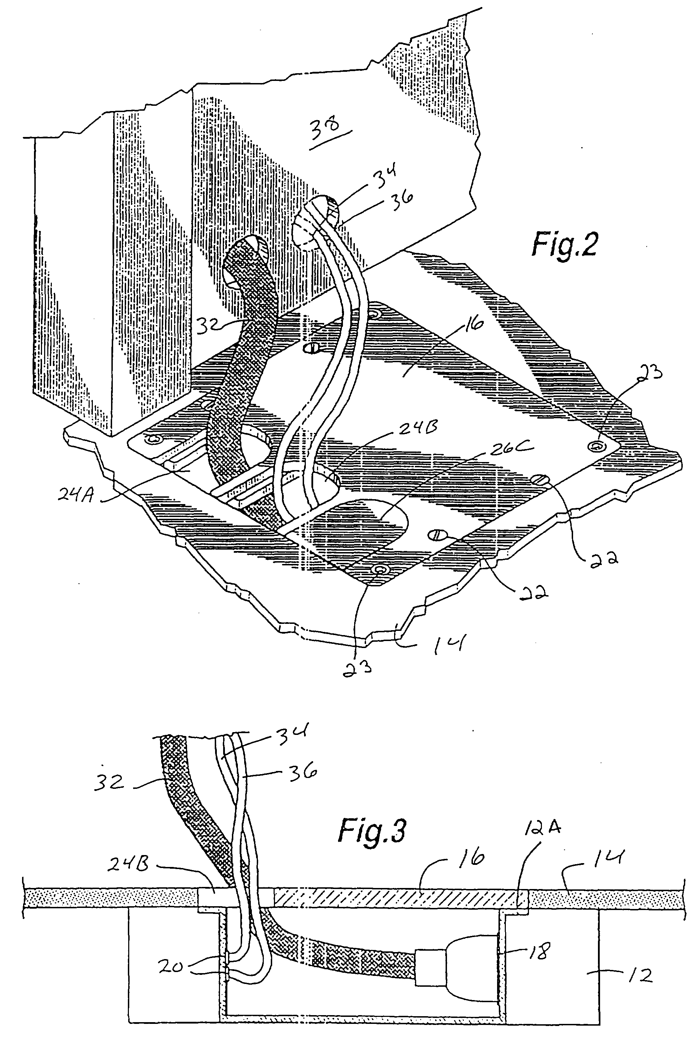

Cover 16 is preferably anchored to floor box 12 by means of screws 22, which threadingly engage suitable holes (not shown) formed in floor box 12. It is desirable to have leveling capabilities in such a cover. Such leveling is provided by screws 23 which bear against upper surface 12A of floor box 12 (See Fig. 3).

In the preferred embodiment shown, cover 16 has three U-shaped slots 24A, 24B, and 24C formed along one of its peripheral edges. Plugs 26A, 26B and 26C are slidably received within slots 24A, 24B, and 24C, respectively. Each slot 24 includes a pair of opposed tabs 28 which engage and support the underside of the lateral edges of plugs 26. Each plug 26 also includes a protrusion 30 extending from the front end thereof, which engages the underside surface of cover 16 adjacent the apex of each slot 24.

Referring now to Figs. 2 and 3, cover 16 is shown with plugs 26A and 26B removed so that cables such as electrical cord 32 and telecommunication lines 34 and 36 may be received within the interior of floor box 12 through slots 24A and 24B, respectively. In this installation, with cord 32 and lines 34 and 36 leading to a conventional modular workstation 38 (i.e., cubicle), plug 26C remains in place, thereby closing slot 24C. In another installation, it may be desirable to remove plug 26C so that slot 24C may be utilized to allow additional cables to be received within floor box 12. Additionally, it will be understood that any number of slots 24 may be formed in cover 16 so that more, or less, cables may be accommodated.

As best seen in Fig. 3, cover 16 maintains a substantially flush profile with floor 14 when in use, and when not in use. Floor 14 and cover 16 will, in most cases, be covered with carpeting having suitable access openings cut therethrough to accommodate cord 32 and lines 34 and 36. For clarity of illustration, the carpeting is not shown in the attached drawings. With plugs 26A-26C in place, cover 16 provides a virtually indistinguishable area co-planar with floor 14, which is capable of supporting most loads experienced in a commercial office setting. For example, the support provided by tabs 28 enable plugs 26 to withstand the pressure exerted by a high-heeled shoe. When in use, cover 16 maintains its flush contour, creating no unsightly protuberances as with conventional covers.

While the principles of providing a flush cover for a floor box have been made clear from the foregoing disclosure, it is to be expected that various modifications may be made-to the preferred embodiment without departing from the spirit and scope of this invention. Accordingly, the scope of coverage provided by this patent is to be limited only by the following claims in conjunction with the prior art.

## Claims

1. A floor-mounted assembly for housing electrical cable comprising:
a box member having an open top and an interior compartment, said compartment being of configuration to accommodate electrical cable therein, said box member being mountable in a floor;
a cover securable to said open top of said box, said cover having a generally planar top surface adapted to lie substantially flush with said floor upon installation of said cover on said box member, said cover having at least one access opening formed therein suitable for allowing entrance of a cable into said box; and
a plug member selectively installable within, and removable from, said access opening, whereupon installation of said plug member creates a substantially void-free top surface for said box and removal of said plug member allows entrance of said cable through said access opening.

2. An assembly as set forth in claim 1, wherein:
said plug member is slidably disposable within said access opening.

3. An assembly as set forth in claim 1 or claim 2, wherein:
said cover includes at least two said access openings.

4. An assembly as set forth in any one of claims 1 to 3, wherein:
said cover contains three said access openings.

5. An assembly as set forth in any one of claims 1 to 4, wherein:
said box member contains at least one electrical connection.

6. An assembly as set forth on claim 5, wherein:
there are at least two electrical connections, comprising one electrical receptacle and one telecommunications receptacle.
